# EUROPEAN PATENT SPECIFICATION

(11) **EP 1 584 548 B1**
(45) Date of publication and mention of the grant of the patent: **14.10.2009**
(21) Application number: 04771216.1
(22) Date of filing: 04.08.2004
(51) Int. Cl.: B62J 31/00, B62K 11/08

(54) **METHOD OF MANUFACTURING MOTORCYCLE AND TANK-IN FRAME OF MOTORCYCLE**
VERFAHREN ZUR HERSTELLUNG VON MOTORRÄDERN UND TANK-IM-RAHMEN FÜR MOTORRAD
PROCEDE DE FABRICATION DE MOTOCYCLE ET CADRE A RESERVOIR DE MOTOCYCLE

(30) Priority: 06.08.2003 JP 2003288278
(43) Date of publication of application: 12.10.2005
(73) Proprietor: Yamaha Hatsudoki Kabushiki Kaisha, Iwata-shi, Shizuoka 438-8501 (JP)
(72) Inventor: IIZUKA, Toshio, Iwata-shi, Shizuoka 438-8501 (JP)
(74) Representative: Grünecker, Kinkeldey, Stockmair & Schwanhäusser Anwaltssozietät
(86) International application number: PCT/JP2004/011181
(87) International publication number: WO 2005/014381

(56) References cited:
- JP-A- 2001 138 973
- JP-U- 2 136 792
- US-A- 3 945 463

## Description

### Technical Field

The present invention relates to a method for manufacturing a motor cycle according to the preamble part of the independent claim 1.

From JP 2001 138973 a method for manufacturing a motor cycle as indicated above is known.

### Background Art

As a lubricating system of a motor cycle, there is a dry sump system provided with an oil tank separately from an engine and lubricating the engine based thereon, other than a wet sump system for sucking up oil stored in an oil pan at a bottom portion of the engine by a pump to deliver to a lubricating portion of the engine. When the dry sump system is adopted, there is achieved an advantage of capable of reducing bulging of a lower portion of the engine by reducing a volume of the oil pan and facilitating to design a vehicle body (see document JP-UM-A-2 136 792).

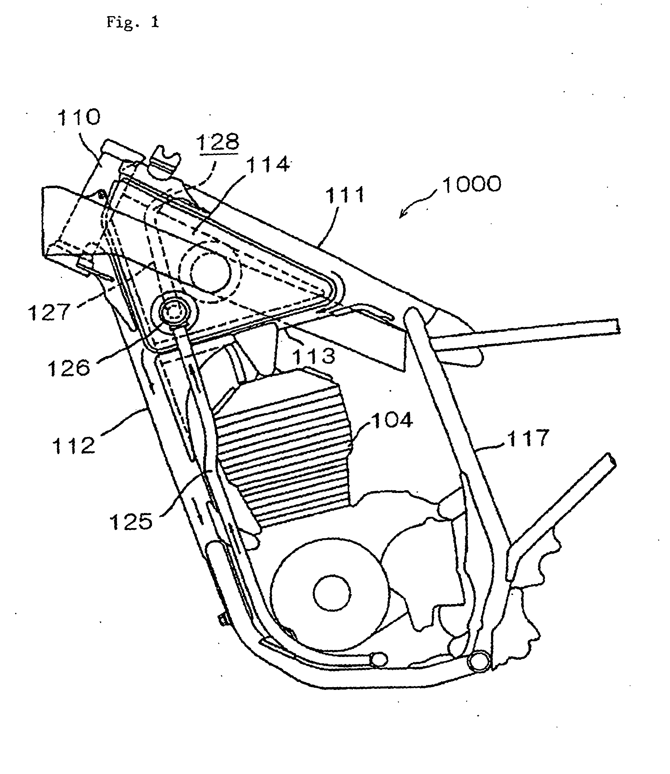

In such a dry sump system, there is proposed a constitution utilizing a portion of a frame as an oil tank (tank in frame) in order to effectively utilize a space and reduce a weight thereof and a motor cycle adopting such a tank in frame has been developed. In the document JP-UM-2-136 792, a motor cycle of a dry sump system and using a tank in frame is disclosed. An essential portion of the motor cycle is shown in Fig.1.

A motor cycle 1000 shown in Fig. 1 includes a head pipe 110, a main tube 111, and a down tube 112, and the main tube 111 and the down tube 112 are connected by a bridge tube 113. A space surrounded by the main tube 111, the down tube 112 and the bridge tube 113 is further sandwiched by a pair of left and right plate members, and peripheral edge portions thereof are welded to form an oil tank 114 in a hollow shape.

Further, a body tube 117 is extended from a rear end portion of the main tube 111, and an engine 104 is mounted at a portion surrounded by the main tube 111, the body tube 117, the down tube 112 and the like. Oil is delivered from an oil pan (not illustrated) provided on a lower side of the engine 104 to move up by passing an oil introducing hole 125. Successively, the oil flows from a connecting portion 126 into an oil guide hose 127 provided at inside of the oil tank 114 and flows from an opening portion 128 provided at an upper end portion of the guide hole 127 into the main tube 111.

The oil flowing at inside of the main tube 111 flows into the oil tank 114 by passing the main tube 111 and the bridge tube 113. Successively, the oil flows into the down tube 112 and flows to a lower side of the vehicle body by passing an oil path formed at inside of the down tube 112 to be supplied to the engine 104. The oil is circulated in the motor cycle 1000 by such a mechanism.

### Disclosure of the Invention

### Problems that the Invention is to Solve

A leakage test is carried out normally by applying an inner pressure to the oil tank 114 in order to investigate whether oil leakage is brought about when the oil is stored in the above-described oil tank 114. Further, since the oil tank 114 is integrated by a plurality of members (111, 117, plate members and the like), in carrying out the leakage test, it is requested to deal with a total of these.

However, since the main tube 111 and the down tube 112 are provided with large lengths, it is troublesome to deal therewith, as a result, there is a strong concern of complicating operation for carrying out the leakage test. Further, when a tube member integrally constituted continuously with the main tube 111 and the body tube 117 (long main tube) is used, it is further complicated to deal therewith.

Further, there is developed a motor cycle constituted not by a single piece of the main tube (111) but by a pair of two left and right pieces of tube members in order to make a diameter of the main tube slender with an object of increasing a volume of a fuel tank or the like while ensuring a rigidity of the vehicle body. In this case, though it was necessary to utilize a single piece of the main tube passing a center in constituting the oil tank 114 before, that main tube cannot positively be utilized, so it is necessary to develop a new structure of a tank in frame.

The invention has been carried out in view of such a point, and it is an objective of the present invention to improve a method for manufacturing a motor cycle as indicated above so as to be capable of easily carrying out a leakage test.

The objective is solved according to the present invention by a method for manufacturing a motor cycle that adopts a dry sump system as a lubricating system and includes a tank in frame utilizing a portion of a vehicle frame as an oil tank, the method comprising the steps of: (a) forming an oil tank assembly from a head pipe, a down tube extended from the head pipe to a rear lower side, and a gusset for coupling the head pipe and the down tube; and (b) carrying out a leakage test of a space defined by the head pipe, the down tube and the gusset;
wherein there is provided the step of (c) connecting a main frame to the head pipe of the oil tank assembly after the step (b), the main frame extending rearward from the head pipe.

It is preferable that the down tube is a tube member having a structure in which an oil is made to be able to flow in a pipe.

In a preferable embodiment, the main frame of the step (c) is constituted by a pair of left and right frame members, and the respective left and right frame members are connected to the head pipe.

In a preferable embodiment, the pair of left and right frame members are coupled to each other by a cross member, and in the step (c), the cross member is coupled to a portion of the oil tank assembly.

In a preferable embodiment, the main frame is extended to a portion connected to a rear arm and is integrally formed with a rear arm bracket constituting a portion of connecting the rear arm.

Further, there is provided according to claim 6 a vehicle body frame of a motor cycle with a tank in frame being manufactured by a method as mentioned above and comprises a head pipe; a down tube extended from the head pipe to a rear lower side; and a pair of left and right gussets between which the down tube is interposed and the gussets being connected to the down tube and the head pipe, wherein an oil tank is constituted by the head pipe, the down tube and the pair of left and right gussets, and wherein the tank in frame is combined with a main frame, wherein the main frame is directly connected to the head pipe.

It is preferable that the down tube is a tube member having a structure in which an oil is made to be able to flow in a pipe.

It is preferable that the pair of left and right gussets are connected to the down tube and the head pipe by welding or brazing.

In a preferable embodiment, the tank in frame is to be combined with a main frame in use, the main frame is constituted by a pair of left and right frame members, the pair of left and right frame members are coupled to each other by a cross member, and the cross member is coupled to the pair of left and right gussets.

Furthermore, there is described a motor cycle including the above-described vehicle body frame.

It is preferable that the main frame combined with the tank in frame is extended to a portion connected to a rear arm and is integrally formed with a rear arm bracket constituting a portion of connecting the rear arm.

According to the method for manufacturing a motor cycle the oil tank assembly is formed by the head pipe, the down tube, and the gusset for coupling together the head pipe and the down tube, successively, the leakage test of the space defined by the head pipe, the down tube and the gusset is carried out, thereafter, the main frame is connected to the headpipe of the oil tank assembly. Therefore, in carrying out the leakage test, the oil tank assembly is facilitated to deal with. Thus, the leakage test can easily be carried out.

In the following, the present invention is explained in greater detail by means of several embodiments thereof in conjunction with the accompanying drawings, wherein:
Fig.1 is a side view showing an main portion of a motor cycle of a background art;
Fig.2 (a) is a partially broken side view schematically showing a constitution of a tank in frame 100 according to an embodiment of the invention and Fig. 2 (b) is a top view thereof;
Fig.3 is a perspective view of a step for explaining a manufacturing method according to an embodiment of the invention;
Fig.4 is a perspective view of a step for explaining the manufacturing method according to the embodiment of the invention;
Fig. 5 is a side view showing a constitution of a surrounding of the tank in frame 100 according to the embodiment of the invention;
Fig.6 is a partial side view of a motor cycle according to the embodiment of the invention;
Fig.7 is a partial top view of the motor cycle according to the embodiment of the invention;

### Description of Reference Numerals and Signs

- 1: motor cycle (vehicle)
- 2: vehicle body
- 3: vehicle body frame
- 4: front wheel
- 5: front fork
- 6: rear arm
- 7: seat
- 10: head pipe
- 12: down tube
- 13: communicating hole
- 14: gusset
- 15: gusset plate
- 16: coupling plate
- 20: oil tank
- 22: space
- 23: space
- 24: oil
- 26: discharging portion
- 27: return portion
- 28: injecting portion
- 28a: cap
- 29: breather tube
- 30: main frame
- 30a, 30b: frame members (tank rails)
- 32: cross member
- 34: rear arm bracket
- 36: seat rail
- 39: bracket member
- 40: fuel tank
- 41: fuel tube
- 43: fuel pump
- 50: driving apparatus
- 51: engine
- 52: power transmitting apparatus
- 53: support piece
- 54: throttle valve
- 55: fuel
- 56: fuel injection valve
- 59: support piece
- 100: oil tank assembly (tank in frame)
- 1000: motor cycle

### Best Mode for Carrying out the Invention

As a result of intensive investigation in order to resolve the above-described problem, the inventors have reached the invention by finishing to manufacture a tank in frame by using members other than a main tube by positively removing the main tube (main frame) which has been regarded to be necessary to constitute an oil tank of a tank in frame.

A description will be given of an embodiment of the invention in reference to the drawings as follows. In the following drawings, in order to simplify explanation, a constituent element substantially having the same function is designated by the same reference numeral. Incidentally, the invention is not limited to the following embodiment.

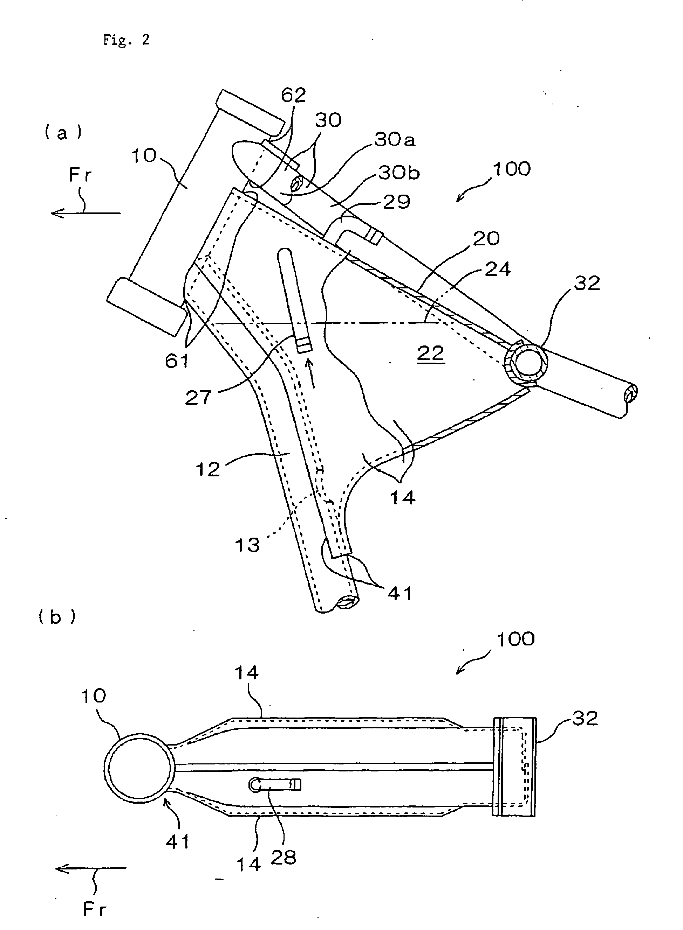

An explanation will be given of a tank in frame 100 according to an embodiment of the invention in reference to Figs.2 (a) and 2 (b). Fig.2 (a) is a partially broken side view schematically showing a constitution of the tank in frame 100, and Fig.2(b) is a top view thereof. Further, an arrow mark Fr designates a front side in an advancing direction of a motor cycle.

The tank in frame (oil tank assembly) 100 of the motor cycle shown in Fig.2 is constituted by a head pipe 10, a down tube 12 extended to a rear lower side from the head pipe 10, and a pair of left and right gussets 14 arranged to interpose the down tube 12. The pair of left and right gussets 14 are connected to the down tube 12 and the head pipe 10, and an oil tank 20 is constituted by the head pipe 10, the down tube 12 and the pair of left and right gussets 14. A space 22 at inside of the oil tank 20 can store oil 24.

The pair of left and right gussets 14 are connected to the down tube 22 and the head pipe 10 by welds 61. Incidentally, other bonding method such as brazing may be used in place of welding. The down tube 12 is a tube member having a structure of capable of making oil flow at inside of the tube, and inside of the down tube 12 and the space 22 of the oil tank 20 are connected via a communicating hole 13. Further, a rear lower side of the tank in frame 100 is provided with a portion of discharging the oil 24. The tank in frame 100 is formed with a return portion 26 of oil and a breather tube 29 and can be provided with a portion of injecting oil.

The tank in frame 100 of the embodiment is used by being combined with a main frame 30 and according to the embodiment, a front end portion of the main frame 30 is connected to the head pipe 10 by welds 62. In Fig.2 (a), there is shown an example of connecting the main frame 30 to facilitate to understand. The main frame 30 is constituted by a pair of left and right frame members (tank rails) 30a, 30b and the pair of left and right frame members (30a, 30b) are coupled to each other by a cross member 32. Further, the cross member 32 is coupled to the pair of left and right gussets 14.

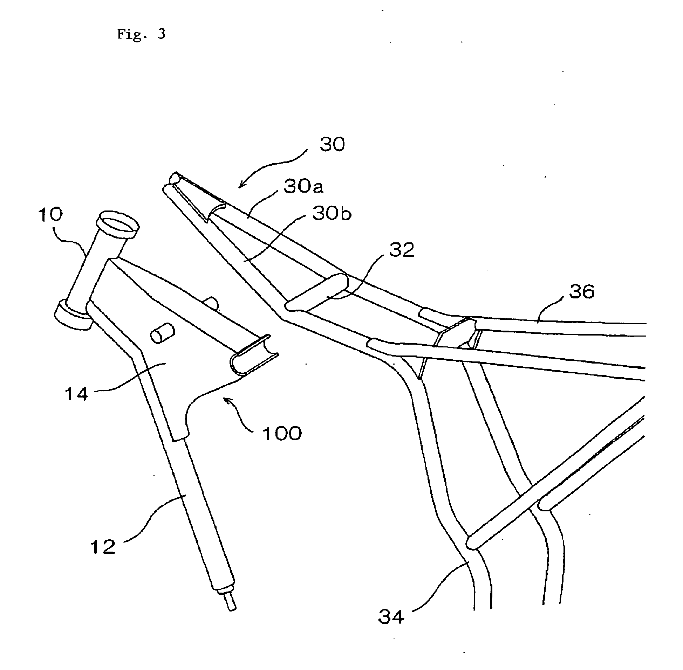

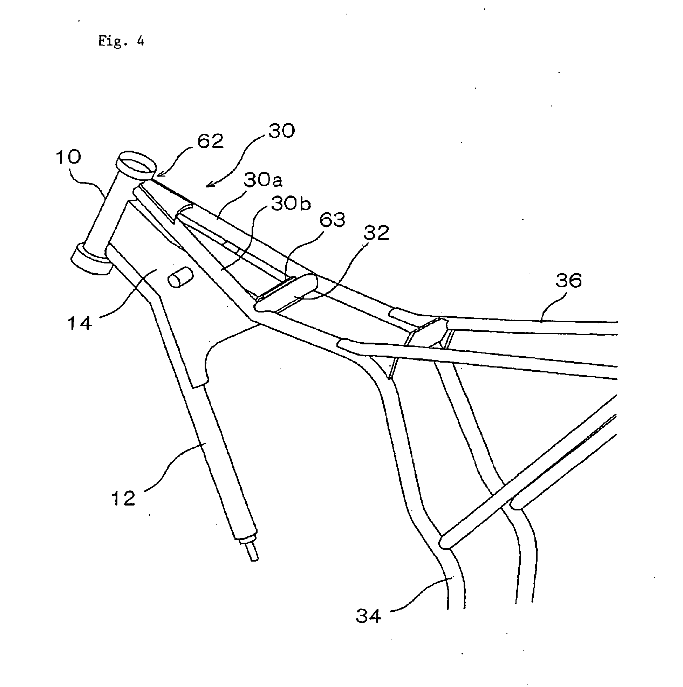

Next, an explanation will be given of a method for manufacturing a motor cycle according to the embodiment in reference to Fig.3 and Fig.4. Fig.3 and Fig.4 are perspective views of steps for explaining a manufacturing method according to the embodiment.

First, as shown by Fig.3, the oil tank assembly (tank in frame) 100 is formed from the head pipe 10, the down tube 12 extended from the head pipe 10 to the rear lower side, and the gusset 14 for coupling the head pipe 10 and the down tube 12 to each other. In this state, the main frame 30 and the oil tank assembly (tank in frame) 100 are not combined yet.

Incidentally, the main frame 30 shown in Fig.3 is formed with not only the pair of left and right frame members (tank rails) 30a, 30b but with other frame members (34, 36 and the like) connected to the frame members 30a, 30b. Further, the main frame 30 is extended from portions of the tank rails 30a, 30b connected to the head pipe 10 to a portion connected to a rear arm (not illustrated). Further, the main frame 30 is integrally formed with a rear arm bracket constituting a portion of connecting the rear arm. Further, portions of the tank rails 30a, 30b rearward from the cross member 32 are connected with seat rails 36.

In a state shown in Fig.3, a leakage test of a space (22) defined by the head pipe 10, the down tube 12 and the gusset 14 is carried out. When leakage is found by the leakage test, connection of the oil tank assembly 100 and the main frame 30 is stopped, the oil tank assembly 100 is replaced by other and the leakage test is carried out therefor. The oil tank assembly 100 determined to be a failure may be repaired and the leakage test may be carried out again.

Next, as shown by Fig.4, the main frame 30 is connected to the head pipe 10 of the oil tank assembly 100. Specifically, front ends of the tank rails 30a, 30b are connected to the head pipe 10 by a weld 62. Further, also the cross member 32 and the gusset 14 are connected by a weld 63. Thereafter, when predetermined steps are carried out, a motor cycle adopting the tank in frame can be fabricated.

According to the manufacturing method of the embodiment, the oil tank assembly 100 is formed from the head pipe 10, the down tube 12 and the gusset 14, the leakage test of the oil tank assembly 100 is carried out, thereafter, the main frame 30 is connected to the head pipe 10. Therefore, in carrying out the leakage test, the oil tank assembly 100 is facilitated to deal therewith, as a result, the leakage test can easily be carried out. Particularly, when the structure of the main frame 30 is large as shown by Fig.3 and Fig.4, the advantage is promoted.

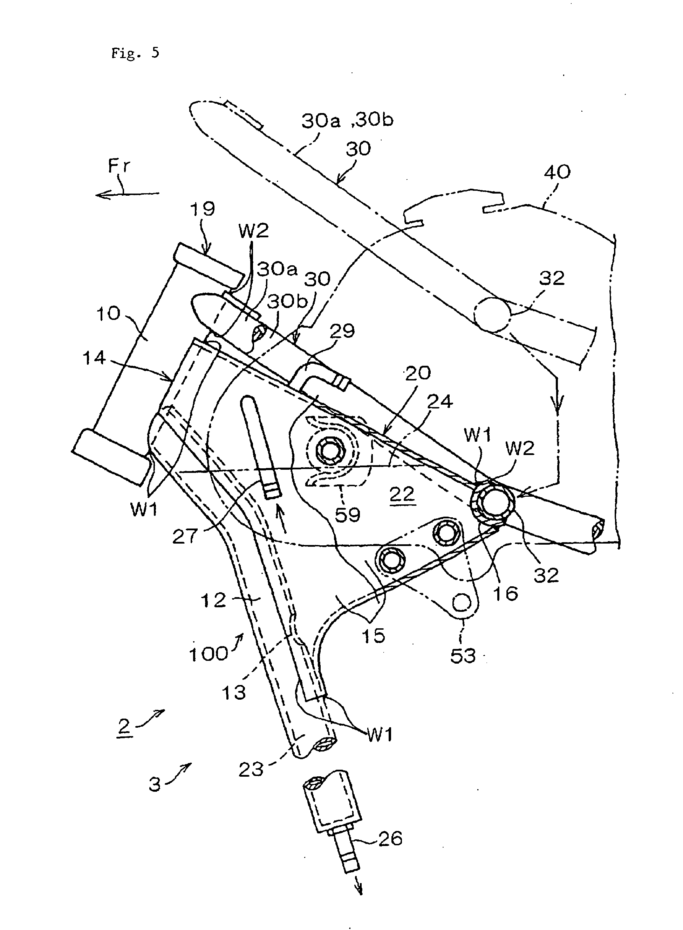

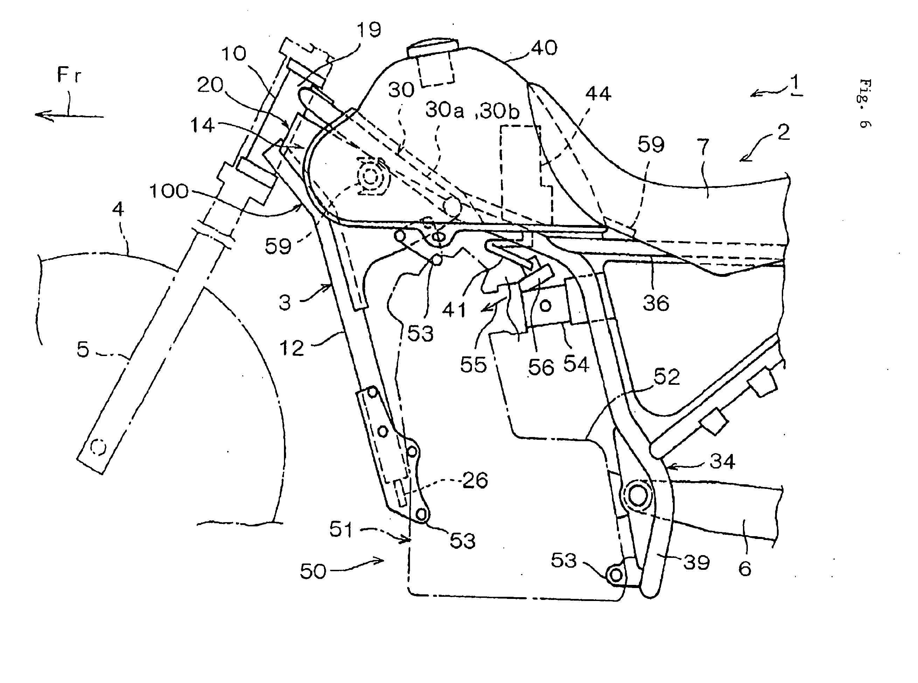

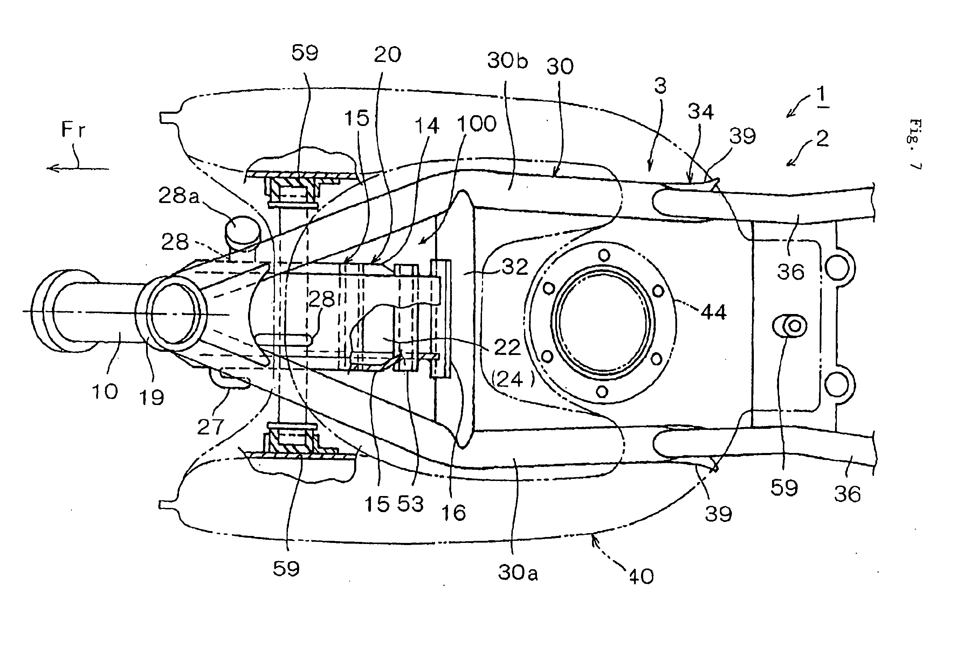

Next, a further detailed explanation will be given of the constitution of the embodiment in reference to Fig.5 to Fig.7. Fig.5 is a side view showing a constitution of a surrounding of the tank frame 100 according to the embodiment. Fig.6 and Fig.7 are a partial side view and a partial top view of a motor cycle according to the embodiment, respectively.

As shown by Fig.6, a vehicle body 2 of a motor cycle (vehicle) 1 is provided with a vehicle body 3, a front fork 5 supported by a front portion of the vehicle body frame 3 for supporting a front wheel 4, a rear arm 6 pivotally supported by a rear portion of the vehicle body frame 3 for supporting a rear wheel, and a seat 7 which is supported by the rear portion of the vehicle body frame 3 and on which a rider can be seated in a straddle-riding style.

Further, the motor cycle 1 is provided with a driving apparatus 50 by which the rear wheel (not illustrated) can be driven to run. The driving apparatus 50 is provided with an engine 51 constituting an internal combustion engine, a power transmitting apparatus 52 installed to be continuous to the engine 51, a support piece 53 for supporting the engine 51 and the power transmitting apparatus 52 integrally by the vehicle body frame 3, a throttle valve 54 installed to be continuous to a suction side of the engine 51, a fuel injection valve 56 by which a fuel 55 is made to be able to inject to supply to an inner portion of the engine 51, and a chain wrapping type cooperatively moving means (not illustrated) for connecting the rear wheel to cooperatively move with the power transmitting apparatus 52.

Further, the motor cycle 1 is provided with a fuel tank 40. The fuel tank 40 is supported by a support piece 59 having a damping function, and capable of storing the fuel 55 to be supplied to the engine 51 via the fuel injection valve 56. A fuel pump 43 is contained in the fuel tank 40 and the fuel pump 43 is provided with a function in which while the fuel tank 55 in the fuel tank 40 is sucked, the fuel 55 is pressurized to supply to the fuel injection valve 56 via a fuel tube 41.

Further, as shown by Fig. 5, the motor cycle 1 is provided with the oil tank 20 for storing the lubricating oil 24 to be supplied to the engine 51 as a dry sump system. The oil tank 20 is formed with a discharging portion 26, a return portion 27, an injecting portion 28 (refer to Fig.7) and a breather tube 29 of the oil 24. The discharging portion 2 6 is communicated with a suction side of the oil provided to the engine 51 (refer to Fig.6), further, a delivery side of the oil pump is communicated with the return portion 27 via respective lubricating portions of the driving apparatus 50. A cap 28a is attached to be able to be seated on the injecting portion 28.

Here, when the engine 51 of the driving apparatus 50 is driven, as shown by Fig.6, the fuel 55 of the fuel tank 40 is supplied to inside of the engine 51 from the fuel pump 43 via the fuel injection valve 56 to subject to combustion. Further, the oil 24 at inside of the oil tank 20 is supplied to lubricate the respective lubricated portions of the driving apparatus 50 by the oil pump cooperativelymovedby the engine 51 to continue to drive the engine 51. Further, by driving the engine 51, the rear wheel is cooperatively moved via the power transmitting apparatus 52 to enable to run the motor cycle 1.

Explaining the vehicle body frame 3 further in details, as shown by Fig.6, the vehicle body frame 3 is provided with the head pipe 10, the main frame 30, the down tube 12, the gusset 14, the rear bracket 34 and seat rail 36.

The head pipe 10 constitutes a front end portion of the vehicle body frame 3 to support the front fork 5. The main frame 30 is extended from the upper portion of the head pipe 10 to the rear lower side to support the rear portion of the driving apparatus 50 and support the fuel tank 40. When a point of supporting the fuel tank 40 is focused, the main frame 30 may be referred to as a tank rail. The down tube 12 is arranged on the lower side of the main frame 30, extended from the lower portion of the head pipe 10 to the rear lower side by a depression angle larger than that of the main frame 30 to support the front portion of the driving apparatus 50. The gusset 14 is a gusset for reinforcement for solidly coupling the head pipe 10 and the front end portion of the down tube 12. The rear bracket 34 is extended integrally from an extending end portion of the main frame 30 to the lower side to pivotally support the rear arm 6. The seat rail 36 is extended from an extending endportion of the main frame 30 to the rear upper side to support the seat 7.

As shown by Fig.6 and Fig.7, front end portions of the pair of left and right frame members 30a, 30b constituting the main frame are respectively coupled to the head pipe 10, and the frame members 30a, 30b are arranged to be separated from each other in a width direction of the motor cycle 1 and respectively extended from the front end portions to the rear lower side. The main frame 30 is provided with the pair of left and right frame members 30a, 30b and the cross member 32 having a section in a circular shape for coupling middle portions of the frame member 30a, 30b. A space between the left and right frame members 30a, 30b is arranged with a lower portion of the fuel pump 43 constituting at least a portion thereof. According to the constitution of the embodiment, the main frame 30 is constituted by the pair of left and right frame members 30a, 30b and therefore, in comparison with a case in which the main frame 30 is constituted by a single frame member (for example, a single piece of a tube member), a diameter (dimension) of the frame member (main tube) can be made to be slender, as a result, not only a strength and a rigidity of the vehicle body frame 3 can be promoted but also a volume of the fuel tank can be increased.

Further, the gusset 14 is provided with a pair of left and right gusset plates 15, 15 and the coupling plate 16 for coupling rear portions of the gusset plates 15, 15. As shown by Fig.5, a rear face of the coupling plate 16 is constituted by a shape of a face recessed in a circular arc recessed to the front lower side, and the cross member 32 is fitted to the rear face of the coupling plates 16 from a rear side thereof. Further, as shown by Fig. 6, the rear arm brackets 34 are provided with a pair of left and right bracket members 39, 39 and the left and right frame members 30a, 30b and the left and right bracket members 39, 39 are integrally formed respectively by bending left and right single pieces of pipes.

Further, as shown by Fig.5, the assembly 100 is formed by coupling together the head pipe 10, the front end portion of the down tube 12 and the gusset 14 by first welds W1, and the oil tank 20 is formed by a portion of the assembly 100. Specifically, the front end portion of the down tube 12 is coupled to the lower portion of the head pipe 10, the front end portion of the gusset 14 is coupled to a middle portion in an up and down direction of the head pipe 10 and the down tube 12 and the gusset 14 are coupled to each other.

The closed first space 22 is formed by the left and right gusset plates 15, 15 and the coupling plate 16, further, the communicating hole 13 for communicating the bottom portion of the first space 22 and a second space 23 at inside of the down tube 12 is formed at the down tube 12. The first and the second spaces 22, 23 are made to constitute a space for storing the oil 24 of the oil tank 20. Further, the return portion 27, the injecting portion 28 and the breather tube 29 are formed at the upper portion of the first space 22 and the discharging portion 26 is formed at the lower end portion of the down tube 12.

Further, the main frame 30 is coupled to a portion 19 of the assembly 100 other than the oil tank 20 (head pipe 10) by the second weld W2. Specifically, the portion 19 constituting the upper portion of the head pipe 10 and a portion remote from the upper end portion of the oil tank 20 to the upper side is coupled with the front end portions of the respective frame members 30a, 30b of the main frame 30, and the upper end portion of the oil tank 20 is made to be disposed at vicinities of lower sides of the front end portions of the respective frame members 30a, 30b.

A rear upper portion of the oil tank 20 constituting a portion thereof is arranged in a space between the left and right frame members 30a, 30b. Further, the coupling plate 16 of the gusset 14 is coupled with the cross member 32 of the main frame 30. Further, although the gusset 14 is coupled to the down tube 12 and the head pipe 10, the gusset 14 can be coupled to the main frame 30 after being assembled as shown by Fig.4, as described above, according to the constitution of the embodiment, the cross member 32 of the main frame 30 is coupled to the gusset 14.

Further, in coupling of the front end portions of the respective frame members 30a, 30b to the headpipe 10 and coupling of the cross member 32 to the coupling plate 16 of the gusset 14, at least either one of couplings may be dispensed with. In this case, when the front end portions of the respective frame members 30a, 30b are not coupled to the head pipe 10, the front end portions of the respective frame members 30a, 30b may be disposed to be remote from the head pipe 10 at a vicinity of the head pipe 10 and may be disposed to be remote rearward from the head pipe 10.

According to the constitution of the embodiment, the assembly 100 is formed by coupling together the down tube 12, the head pipe 10 and the gusset 14 and the oil tank 20 is formed by a portion of the assembly 100.

Therefore, the assembly 100 does not include the main frame 30 having a large length and therefore, an outer shape of the assembly 100 can be reduced. Therefore, when the leakage test is carried out with regard to the oil tank 20 formed by the portion of the assembly 100, even when the assembly 100 is requested to be dealt with as a whole, operation of the leakage test can be facilitated by an amount of reducing the outer shape of the assembly 100.

Further, after the leakage test, the main frame 30 can be coupled to the portion 19 of the assembly 100 other than the oil tank (head pipe 10) and therefore, a predetermined strength is ensured for the main body frame 30, as a result, stability in straightly advancing the motor cycle is ensured. Further, in accordance with the coupling of the assembly 100 and the main frame 30, it is not necessary to carry out the leakage test again with regard to the oil tank 20 and therefore, the constitution is very convenient.

Incidentally, the oil tank 20 also achieves an advantage of forming the oil tank 20 not by the main frame 30 but by the down tube 12, the head pipe 10 and the gusset 14. That is, the down tube 12 is disposed on the lower side of the main frame 30 and normally, provided with the depression angle larger than that of the main frame 30 and therefore, the bottom portion of the oil tank 20 can comparatively easily be deepened by an amount of utilizing the down tube 12 in forming the oil tank 20 and the volume of the oil tank 20 can further be enlarged.

Further, according to the embodiment, the front end portion of the main frame 30 is coupled to the upper portion of the head pipe 10 of the assembly 100 and the front upper end portion of the oil tank 20 is disposed at a vicinity of the lower side of the front end portion of the main frame 30. Since the front end portion of the main frame 30 is coupled to the head pipe 10, the strength of the main body frame 3 can be ensured, further, since the front upper end portion of the oil tank 20 is disposed at the vicinity of the lower side of the front end portion of the main frame 30, the shape of the oil tank 20 can further be enlarged and the volume can further be increased. In addition thereto, in accordance with enlarging the shape of the oil tank 20, also the strength of the main body frame 3 is further increased.

Further, as described above, according to the embodiment, the main frame 30 and the rear arm bracket 34 are integrally formed by bending the pipe and therefore, in comparison with a case of individually forming the main frame 30 and the rear bracket 34 to couple to each other, a number of parts of the vehicle body frame 3 is reduced, the constitution is simplified and operation of forming the vehicle body frame 3 is facilitated.

Further, as described above, the main frame 30 is provided with the pair of left and right frame members 30a, 30b, the front end portions of the respective frame members 30a, 30b are respectively coupled to the head pipe 10 and therefore, in comparison with the case of constituting the main frame 30 by a single frame member, the strength and the rigidity of the vehicle body frame 3 can be promoted.

In addition thereto, at least a portion of the oil tank 20 is arranged at the space between the left and right frame members 30a, 30b and therefore, the volume of the oil tank 20 can be increased by utilizing the space between the left and right frame members 30a, 30b, as a result, the volume of the oil tank 20 can be increased without enlarging the vehicle 1. Further, the main frame 30 is provided with the cross member 32 for coupling the left and right frame members 30a, 30b, the cross member 32 is coupled to the assembly 100 and therefore, the strength and the rigidity of the vehicle body frame 3 can further be promoted.

Further, the rear face of the coupling plate 16 is constituted by the recess face in the circular arc shape, the cross member 32 of the main frame 30 is made to be fitted to the rear face of the coupling plate 16 from the rear side and therefore, in the integrating step shown in Fig.4, when the cross member 32 of the main frame 30 is fitted to the rear face of the coupling plate 16 of the assembly 100, positioning of the main frame 30 relative to the assembly 100 can easily be carried out. Therefore, integrating operation (forming operation) of the vehicle body frame 3 is facilitated.

Although the explanation has been given of the invention by the preferable embodiment as described above, the detailed description is not an item of limitation but naturally, the invention can variously be modified.

For example, the main frame 30 may be extended substantially horizontally from the head pipe 10 to the rear side. Further, although the main frame 30 integrally formed with the rear arm bracket 34 is shown, the invention is not limited thereto but even when the main frame 30 and the rear arm bracket 34 are individually formed, in carrying out the leakage test, the oil tank assembly 100 is facilitated to deal with, as a result, an effect of capable of easily carrying out the leakage test can be achieved. The same goes with a case in which the main frame 30 is not separated to the left and right frame members 30a, 30b but is constituted by the single frame member. However, the larger the portion including the main frame 30 as shown by Fig. 3 and Fig. 4 and the more complicated is the main frame 30 to be dealt with, the larger the effect is achieved by the embodiment of the invention. Incidentally, although according to the above-described example, explanation has been given of the motor cycle, the vehicle may be other vehicle (straddle-riding type vehicle) such as automatic three or four wheel vehicle. However, in view of the constitution of the embodiment, the advantage of application to the motor cycle is large.

### Industrial Applicability

According to the invention, a method for manufacturing a motor cycle capable of easily carrying out the leakage test can be provided.

## Claims

1. A method for manufacturing a motor cycle (1) that adopts a dry sump system as a lubricating system and includes a tank in frame (100) utilizing a portion of a vehicle frame (3) as an oil tank (20), the method comprising the steps of:
(a) forming an oil tank assembly (100) from a head pipe (10), a down tube (12) extended from the head pipe (10) to a rear lower side, and a gusset (14) for coupling the head pipe (10) and the down tube (12); and
(b) carrying out a leakage test of a space defined by the head pipe (10), the down tube (12) and the gusset (14); **characterized by**
(c) connecting a main frame (30) to the head pipe (10) of the oil tank assembly (100) after the step (b), the main frame (30) extending rearward from the head pipe (10).

2. A method according to claim 1, **characterized in that** the down tube (12) is a tube member having a structure in which an oil is made to be able to flow in a pipe.

3. A method according to claim 1, **characterized in that** the main frame (30) of the step (c) is constituted by a pair of left and right frame members (30a, 30b); and the respective left and right frame members (30a, 30b) are connected to the head pipe (10).

4. A method according to claim 3, **characterized in that** the pair of left and right frame members (30a, 30b) are coupled to each other by a cross member (32); and in the step (c), the cross member (32) is coupled to a portion of the oil tank assembly (100).

5. A method according to any one of claims 1 to 4, **characterized in that** the main frame (30) is extended to a portion connected to a rear arm (6) and is integrally formed with a rear arm bracket (34) constituting a portion of connecting the rear arm (6).

6. A vehicle body frame of a motor cycle (1) with a tank in frame (100) being manufactured by a method according to any one of claims 1 to 5, comprises a head pipe (10), a down tube (12) extended from the head pipe (10) to a rear lower side, and a pair of left and right gussets (14) between which the down tube (12) is interposed and the gussets (14) being connected to the down tube (12) and the head pipe (10), wherein an oil tank (20) is constituted by the head pipe (10), the down tube (12) and the pair of left and right gussets (14), and wherein the tank in frame (100) is combined with a main frame (30), **characterized in that** the main frame (30) is directly connected to the head pipe (10).

7. A vehicle body frame according to claim 6, **characterized in that** the down tube (12) is a tube member having a structure in which an oil is made to be able to flow in a pipe.

8. A vehicle body frame according to claim 6, **characterized In that** the pair of left and right gussets (14) are connected to the down tube (12) and the head pipe (10) by welding or brazing.

9. A vehicle body frame according to claim 6, **characterized in that** the tank in frame (100) is to be combined with a main frame (30) in use; the main frame (30) is constituted by a pair of left and right frame members (30a, 30b); the pair of left and right frame members (30a, 30b) are coupled to each other by a cross member (32); and the cross member (32) is coupled to the pair of left and right gussets (14).

10. A motor cycle (1) including the vehicle body frame according to any one of claims 6 to 9.

11. A motor cycle according to claim 10, **characterized in that** the main frame (30) combined with the tank in frame (100) is extended to a portion connected to a rear arm (6) and is integrally formed with a rear arm bracket (34) constituting a portion of connecting the rear arm (6).

## Patentansprüche

1. Verfahren zum Herstellen eines Motorrades (1), das ein Trockensumpfsystem als ein Schmierungssystem anwendet und einen Tank im Rahmen (100) unter Verwendung eines Abschnittes eines Fahrzeugrahmens (3) als einen Öltank (20) enthält, wobei das Verfahren die Schritte aufweist von:
a) Bilden einer Öltankanordnung (100) aus einem Kopfrohr (10), einem Abwärtsrohr (12), das sich von dem Kopfrohr (10) zu einer hinteren unteren Seite erstreckt, und einem Eckblech (14) zum Kuppeln des Kopfrohres (10) und des Abwärtsrohres (12); und
b) Ausführen eines Leckage- Test eines Raumes, gebildet durch das Kopfrohr (10), das Abwärtsrohr (12) und das Eckblech (14); **gekennzeichnet durch**
c) Verbinden eines Hauptrahmens (30) mit dem Kopfrohr (10) der Öltankanordnung (100 nach dem Schritt (b), wobei sich der Hauptrahmen (30) nach hinten von dem Kopfrohr (10) erstreckt.

2. Verfahren nach Anspruch 1, **dadurch gekennzeichnet, dass** das Abwärtsrohr (12) ein Rohrteil mit einem Aufbau ist, in dem ein Öl veranlasst wird, in der Lage zu sein, in einem Rohr zu fließen.

3. Verfahren nach Anspruch 1, **dadurch gekennzeichnet, dass** der Hauptrahmen (30) des Schrittes (c) durch ein Paar von linken und rechten Rahmenteilen (30a, 30b) gebildet ist; und die jeweiligen linken und rechten Rahmenteile (30a, 30b) mit dem Kopfrohr (10) verbunden sind.

4. Verfahren nach Anspruch 3, **dadurch gekennzeichnet, dass** das Paar von linken und rechten Rahmenteilen (30a, 30b) miteinander durch ein Kreuzteil (32) gekuppelt sind; und in dem Schritt (c) das Querteil (32) mit einem Abschnitt der Öltankanordnung (100) gekuppelt ist.

5. Verfahren nach einem der Ansprüche 1 bis 4, **dadurch gekennzeichnet, dass** der Hauptrahmen (30) zu einem Abschnitt, verbunden mit einem hinteren Arm (6), erstreckt ist und einstückig mit einer hinteren Armhalterung (34), die einen Abschnitt der Verbindung des hinteren Armes (6) bildet, ausgebildet ist.

6. Fahrzeugkarosserierahmen eines Motorrades (1) mit einem Tank im Rahmen (100), der durch ein Verfahren nach einem der Ansprüche 1 bis 5 hergestellt wird, der aufweist ein Kopfrohr (10), ein Abwärtsrohr (12), erstreckt von dem Kopfrohr (10) zu einer hinteren unteren Seite, und ein Paar von linken und rechten Eckblechen (14), zwischen denen das Abwärtsrohr (12) eingesetzt ist und das Eckblech (14) mit dem Abwärtsrohr (12) und dem Kopfrohr (10) verbunden ist, wobei ein Öltank (20) durch das Kopfrohr (10), das Abwärtsrohr (12) und das Paar der linken und rechten Eckbleche (14) gebildet ist und wobei der Tank im Rahmen (100) mit einem Hauptrahmen (30) kombiniert ist, **dadurch gekennzeichnet, dass** der Hauptrahmen (30) direkt mit dem Kopfrohr (10) verbunden ist.

7. Fahrzeugkarosserierahmen nach Anspruch 6, **dadurch gekennzeichnet, dass** das Abwärtsrohr (12) ein Rohrteil mit einem Aufbau ist, in dem ein Öl veranlasst wird, in der Lage zu sein, in einem Rohr zu fließen.

8. Fahrzeugkarosserierahmen nach Anspruch 6, **dadurch gekennzeichnet, dass** das Paar von linken und rechten Eckblechen (14) mit dem Abwärtsrohr (12) und dem Kopfrohr (10) durch Schweißen oder Hartlöten verbunden ist.

9. Fahrzeugkarosserierahmen nach Anspruch 6, **dadurch gekennzeichnet, dass** der Tank im Rahmen (100) im Gebrauch mit einem Hauptrahmen (30) kombiniert ist; wobei der Hauptrahmen (30) durch ein Paar von linken und rechten Rahmenteilen (30a, 30b) gebildet ist; wobei das Paar von linken und rechten Rahmenteilen (30a, 30b) miteinander durch ein Querteil (32) gekuppelt ist; und das Querteil (32) mit dem Paar von linken und rechten Eckblechen (14) gekuppelt ist.

10. Motorrad (1), enthaltend den Fahrzeugkarosserierahmen, nach einem der Ansprüche 6 bis 9.

11. Motorrad nach Anspruch 10, **dadurch gekennzeichnet, dass** der Hauptrahmen (30), kombiniert mit dem Tank im Rahmen (100), zu einem Abschnitt, verbunden zu einem hinteren Arm (6), erstreckt ist und einstückig mit einer hinteren Armhalterung (34) gebildet ist, die einen Abschnitt der Verbindung des hinteren Arms (6) bildet.

## Revendications

1. Procédé de fabrication d'un motocycle (1), adoptant un système à carter sec en tant que système de lubrification et comprenant un cadre à réservoir (100) utilisant une partie d'un cadre de véhicule (3) en tant que réservoir d'huile (20), le procédé comprenant les étapes consistant à :
(a) former un ensemble de réservoir d'huile (100), composé d'un tube de tête (10), d'un tube descendant (12) s'étendant à partir du tube de tête (10) vers un côté inférieur arrière, et d'un gousset (14), pour coupler le tube de tête (10) et le tube descendant (12) ; et
(b) procédé à un test de fuite d'un espace défini par le tube de tête (10), le tube descendant (12) et le gousset (14) ; **caractérisé par**
(c) la connexion d'un cadre principal (30) au tube de tête (10) de l'ensemble de réservoir d'huile (100) après l'étape (b), le cadre principal (30) s'étendant vers l'arrière, à partir du tube de tête (10).

2. Procédé selon la revendication 1,
**caractérisé en ce que** le tube descendant (12) est un organe tubulaire ayant une structure dans laquelle une huile est amenée à pouvoir s'écouler dans un tube.

3. Procédé selon la revendication 1,
**caractérisé en ce que** le cadre principal (30) de l'étape (c) est constitué d'une paire d'organes de cadre gauche et droit (30a, 30b) ; et les organes de cadre gauche et droit (30a, 30b) sont reliés au tube de tête (10).

4. Procédé selon la revendication 3,
**caractérisé en ce que** la paire d'organes de cadre gauche et droit (30a, 30b) sont couplés à chaque autre par un organe transversal (32) ; et, à l'étape (c), l'organe transversal (32) est couplé à une partie de l'ensemble de réservoir d'huile (100).

5. Procédé selon l'une quelconque des revendications 1 à 4, **caractérisé en ce que** le cadre principal (30) est étendu à une partie connectée à un bras arrière (6) et est formé d'une seule pièce avec un support de bras arrière (34), constituant une partie de liaison au bras arrière (6).

6. Cadre de carrosserie de véhicule d'un motocycle (1), avec un cadre à réservoir (100), fabriqué par un procédé selon l'une quelconque des revendications 1 à 5, comprenant un tube de tête (10), un tube descendant (12) s'étendant à partir du tube de tête (10) vers un côté inférieur arrière, et une paire de goussets gauche et droit (14), entre lesquels le tube descendant (12) est interposé, et les goussets (14) étant reliés au tube descendant (12) et au tube de tête (10), dans lequel un réservoir à huile (20) est constitué par le tube de tête (10), le tube descendant (12) et la paire de goussets gauche et droit (14), et dans lequel le cadre à réservoir (100) est combiné à un cadre principal (30), **caractérisé en ce que** le cadre principal (30) est directement relié au tube de tête (10).

7. Cadre de carrosserie de véhicule selon la revendication 6, **caractérisé en ce que** le tube descendant (12) est un organe tubulaire ayant une structure dans laquelle une huile est amenée à pouvoir s'écouler dans un tube.

8. Cadre de carrosserie de véhicule selon la revendication 6, **caractérisé en ce que** la paire de goussets gauche et droit (14) sont reliés au tube descendant (12) et au tube de tête (10) par soudage ou brasage.

9. Cadre de carrosserie de véhicule selon la revendication 6, **caractérisé en ce que** le cadre à réservoir (100) doit être combiné en utilisation à un cadre principal (30) ; le cadre principal (30) est constitué par une paire d'organes de cadre gauche et droit (30a, 30b) ; la paire d'organes de cadre gauche et droit (30a, 30b) sont reliés à chaque autre par un organe transversal (32) ; et l'organe transversal (32) est couplé à la paire de goussets gauche et droit (14).

10. Motocycle (1), comprenant le cadre de carrosserie de véhicule selon l'une quelconque des revendications 6 à 9.

11. Motocycle selon la revendication 10, **caractérisé en ce que** le cadre principal (30), combiné au cadre à réservoir (100), est étendu à une partie connectée à un bras arrière (6) et est formé d'une seule pièce avec un support de bras arrière (34), constituant une partie de liaison au bras arrière (6).
